Europäisches Patentamt

European Patent Office

Office européen des brevets

(19)

(11) Veröffentlichungsnummer: **0 240 485**
**B1**

(12)

# EUROPÄISCHE PATENTSCHRIFT

(45) Veröffentlichungstag der Patentschrift:
23.05.90

(21) Anmeldenummer: 87890048.9

(22) Anmeldetag: 12.03.87

(51) Int. Cl.⁵: **C21C 5/56**, F27B 1/02,
C21B 13/00

(54) Anlage zur Herstellung von Stahl aus Schrott.

(30) Priorität: 17.03.86 AT 695/86

(43) Veröffentlichungstag der Anmeldung:
07.10.87 Patentblatt 87/41

(45) Bekanntmachung des Hinweises auf die Patenterteilung:
23.05.90 Patentblatt 90/21

(84) Benannte Vertragsstaaten:
CH DE FR GB IT LI SE

(56) Entgegenhaltungen:
AT-B- 323 778
DE-B- 2 418 109
DE-B- 2 504 933
DE-C- 2 061 677
FR-A- 2 261 343
FR-A- 2 396 252

(73) Patentinhaber: VOEST-ALPINE
INDUSTRIEANLAGENBAU GESELLSCHAFT m b.H.,
Turmstrasse 44, A-4020 Linz(AT)

(72) Erfinder: Steipe, Othmar, Dipl.-Ing., Lissagasse 8,
A-4020 Linz(AT)
Erfinder: Berger, Harald, Dipl.-Ing.Dr.mont.,
Mariahilfgasse 11, A-4020 Linz(AT)

(74) Vertreter: Wolfram, Gustav, Dipl.-Ing.,
Schwindgasse 7 P.O. Box 205, A-1041 Wien(AT)

## Beschreibung

Die Erfindung betrifft eine Anlage zur Herstellung von Stahl aus Schrott und gegebenenfalls Zuschlagstoffen, mit einem Schachtofenteil, der einen einen flüssigen Sumpf aus Vorschmelze aufnehmenden Boden und seitlich in den unteren Teil seines Innenraumes mündende Beheizungseinrichtungen aufweist, und mit einem mit dem Schachtofenteil integral zusammenhängenden Herdofenteil, in den die Vorschmelze aus dem Schachtofenteil überführbar ist.

Eine Anlage dieser Art ist aus der AT-B 344 215 bekannt. Hierbei gelangt die sich im Sumpf sammelnde Vorschmelze über eine elektromagnetische Gegenstromrinne in den Herdofenteil, wobei der Badspiegel im Herdofenteil höher gehalten ist als der Badspiegel des Sumpfes im Schachtofenteil, so daß die im Herdofenteil gebildete Schlacke im Gegenstrom zur Schmelze in Richtung zum Schachtofenteil fließt und dort abgezogen wird. Der Herdofenteil ist in der Art eines Sauerstoffaufblaskonverters ausgeführt, so daß es zur Herstellung von Stahl notwendig ist, dem Schachtofenteil neben Schrott auch Roheisen zuzuführen.

Die elektromagnetische Rinne, mit deren Hilfe eine große Reaktionsoberfläche zwischen Schmelze und Schlacke erzielt werden soll, ist insofern nachteilig, da sie konstruktiv sehr aufwendig und störanfällig ist.

Bei der bekannten Anlage wird der erschmolzene Stahl kontinuierlich über einen Siphon ausrinnen gelassen, was den Nachteil hat, daß sich die Zusammensetzung und die Temperatur des Stahles über die Zeitdauer des Auslaufens ändern kann. Außerdem sind damit Temperaturverluste verbunden. Der so erzeugte Stahl bedarf vor dem Abgießen unbedingt einer weiteren Behandlung in einem nachgeschalteten Aggregat.

Die Erfindung bezweckt die Vermeidung dieser Nachteile und Schwierigkeiten und stellt sich die Aufgabe, eine Anlage der eingangs beschriebenen Art zu schaffen, mit der Stahl aus Schrott ohne Zugabe von Roheisen und mit möglichst geringem Energieeintrag erzeugbar ist, wobei die Anlage möglichst kompakt gestaltet sein soll, so daß die Möglichkeit gegeben ist, einen diskontinuierlichen Abstich durch Kippen vorzunehmen. Insbesondere soll es möglich sein, einen gießfertigen Stahl chargenweise herzustellen, der keine Nachbehandlung mehr erfordert.

Diese Aufgabe wird erfindungsgemäß dadurch gelöst,

– daß der Unterteil des Schachtofenteiles gegenüber dem oberen, die Schrottsäule aufnehmenden Schachtteil nach unten divergierend ausgebildet ist,

– daß die in diesem Unterteil angeordneten Beheizungseinrichtungen als Plasmabrenner ausgebildet sind,

– daß der Herdofenteil unmittelbar an den Unterteil des Schachtofenteiles anschließt und

– daß der Herdofenteil mindestens eine weitere, mit elektrischer Energie betriebene Beheizungsvorrichtung zum Behandeln der aus dem Sumpf des Schachtofenteiles übergeführten Vorschmelze aufweist.

Vorzugsweise ist zwischen dem unteren Schachtofenteil und dem Herdofenteil ein Überlaufwehr vorgesehen, wodurch es möglich ist, einen Sumpf mit geringer Höhe in dem Schachtofenteil zu belassen, so daß ein guter Kontakt mit einer Bodenanode im Fall des Vorsehens von Gleichstrom-Plasmabrennern gegeben ist.

Zweckmäßig ist der Boden des Herdofenteiles tiefer angeordnet als der Boden des Schachtofenteiles, wodurch eine größere, einer Charge entsprechende Vorschmelzenmenge im Herdofenteil angesammelt werden kann, so daß der Schmelzbetrieb des Schachtofenteiles kontinuierlich, die Behandlung der Vorschmelze im Herdofenteil jedoch diskontinuierlich, also chargenweise, erfolgen kann.

Gemäß einer bevorzugten Ausführungsform ist eine Mehrzahl von Plasmabrennern um den Umfang des Unterteiles des Schachtofenteiles verteilt angeordnet, welche Plasmabrenner axial verschiebbar sowie schwenkbar ausgebildet sind, und ist ein zusätzlicher Plasmabrenner gegen den Bereich des Überlaufwehrs gerichtet. Hierdurch ist eine optimale Wärmeeinbringung in den Schrott möglich.

Der zusätzliche Plasmabrenner im Bereich des Überlaufwehres sorgt außerdem für eine ausreichende Überhitzung des Sumpfes zum Zweck des Überfließens der Vorschmelze über das Überlaufwehr.

Vorzugsweise ist das gesamte, aus Schachtofenteil und Herdofenteil bestehende Aggregat kippbar, u.z.w. senkrecht zu einer das Zentrum des Schachtofenteiles mit dem Zentrum des Herdofenteiles verbindenden horizontalen Achse, wobei zweckmäßig das Aggregat auf Kippwiegen positioniert ist, wodurch das chargenweise Abstechen von Stahl aus dem Herdofenteil in einfacher Weise ermöglicht wird.

Hierzu weist zweckmäßig der Herdofenteil einen exzentrisch angeordneten Bodenabstich für den Stahl und in einer Seitenwand eine Arbeitstür für das Abziehen der Schlacke auf.

Um gegebenenfalls einen Frischprozeß durchführen zu können, ist vorteilhaft eine Sauerstoffblaslanze zum Einblasen von Frischsauerstoff in den Herdofenteil einführbar.

Eine bevorzugte Ausführungsform ist dadurch gekennzeichnet, daß sowohl der Unterteil des Schachtofenteiles als auch der Herdofenteil einen im Grundriß kreisförmigen Innenraum aufweisen, wobei der Innenraum des Schachtofenteiles den Innenraum des Herdofenteiles im Grundriß etwa tangiert oder geringfügig überschneidet und der Übergang von einem Raum in den anderen verengt ausgebildet ist.

Zweckmäßig ist die Beheizungsvorrichtung des Herdofenteiles als Lichtbogenaggregat ausgebildet.

Vorteilhaft ist der gegen den Bereich des Überlaufwehres gerichtete Plasmabrenner mit einem Neigungswinkel von 50 bis 80°, insbesondere 70°, gegen die Horizontale angeordnet.

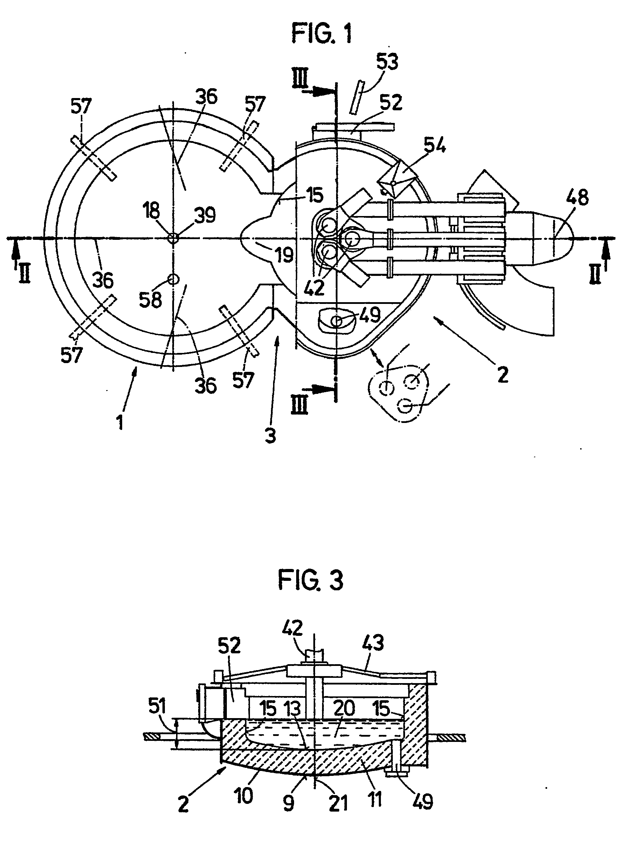

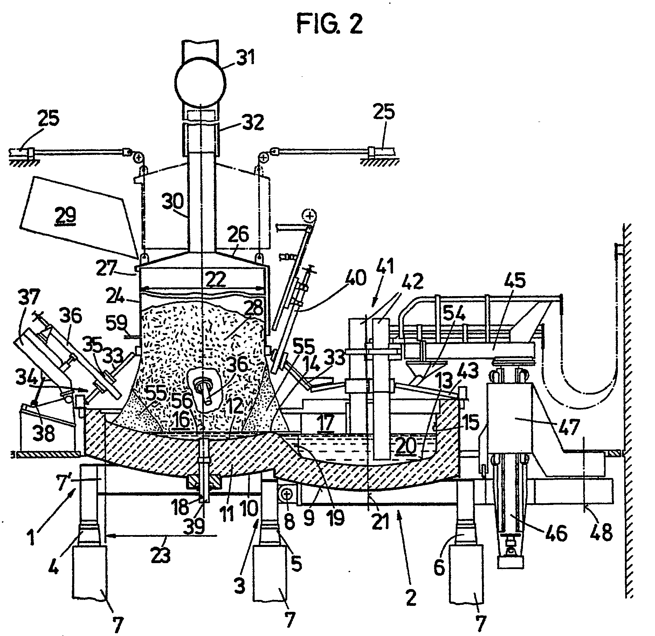

Die Erfindung ist nachfolgend anhand eines in der Zeichnung dargestellten Ausführungsbeispieles näher erläutert, wobei Fig. 1 einen teilweise geschnittenen Grundriß der Anlage, Fig. 2 einen Vertikalschnitt gemäß der Linie II–II der Fig. 1 und Fig. 3 einen Vertikalschnitt gemäß der Linie III–III der Fig. 1 zeigen.

Die gesamte Anlage weist ein aus einem Schachtofenteil 1 und einem mit diesem integral zusammenhängenden Herdofenteil 2 gebildetes Aggregat 3 auf, welches über Kippwiegen 4, 5, 6 gegenüber dem Fundament 7 abgestützt ist. Insgesamt sind drei Kippwiegen 4, 5, 6 vorgesehen, wobei zwei Kippwiegen 4, 6 randseitig und eine Kippwiege 5 mittig am Übergang zwischen Schachtofenteil 1 und Herdofenteil 2 vorgesehen sind. Zwei Kippwiegen 4, 5 sind miteinander starr mittels Querträger 7' verbunden, die dritte, beim Herdofenteil 2 randseitig angeordnete Kippwiege 6 ist an dem von den starr miteinander verbundenen Kippwiegen 4, 5 gebildeten Teil mittels eines Gelenkes 8 zur Ermöglichung von Dehnungen bzw. Auslenkungen angelenkt.

Der Boden 9 des Aggregates 3 ist von einem Blechpanzer 10 gebildet, der innen mit einer feuerfesten Auskleidung 11 versehen ist. Er weist zwei nebeneinander liegende Boden-Vertiefungen 12, 13 auf, wobei eine Vertiefung 12 dem Schachtofenteil 1 und die zweite Vertiefung 13, die mit der ersten Vertiefung über ein Überlaufwehr 14 in Verbindung steht, dem Herdofenteil zugeordnet ist. Die feuerfeste Auskleidung 11 ist im Bereich des Herdofenteiles 2 höher gezogen und bildet somit integral mit dem Boden 9 zusammenhängende Seitenwände 15 für den Herdofenteil 2.

Im Grundriß sind, wie aus Fig. 1 ersichtlich, beide Boden-Vertiefungen 12, 13 kreisförmig ausgebildet. Die durch die Boden-Vertiefungen 12, 13 gebildeten Innenräume 16, 17 des Schachtofenteiles 1 und des Herdofenteiles 2 berühren einander etwa tangierend. Das Überlaufwehr 14 ist an der Berührungsstelle angeordnet und durch eine in der feuerfesten Auskleidung 11 des Herdofenteiles 2 vorgesehene, in Richtung zum Zentrum 18 des Schachtofenteiles 1 ragende Ausnehmung 19 in Richtung zum Zentrum 18 des Schachtofenteiles 1 verlegt angeordnet. Die Boden-Vertiefung 13 des Herdofenteiles 2 liegt tiefer als die Boden-Vertiefung 12 des Schachtofenteiles 1, so daß der Herdofenteil eine ganze Charge von Schmelze 20 aufnehmen kann, ohne daß die Höhe des Überlaufwehrs 14 erreicht wird.

Wie aus den Fig. 1 und 2 ersichtlich, ist das Aggregat 3 um eine das Zentrum 18 des Schachtofenteiles 1 mit dem Zentrum 21 des Herdofenteiles 2 verbindende horizontale Achse kippbar.

Der Schachtofenteil 1 weist einen zylindrischen, im Durchmesser 22 kleiner als der Durchmesser 23 der Boden-Vertiefung 12 desselben gehaltenen Schachtteil 24 auf, der von einem Metallmantel gebildet ist. Am oberen Ende des Schachtteiles 24 ist eine mittels Druckmittelzylinder 25 heb- und senkbare Haube 26 angeordnet, die an einer Seite eine Ausnehmung 27 aufweist, so daß bei gehobener, in Fig. 2 strichpunktiert dargestellter Haube 26 eine Chargieröffnung zum Chargieren von Schrott 28 mittels einer Schrottschurre 29 freigegeben ist. Im Zentrum der Haube 26 ist ein Abgasabzugsrohr 30 vorgesehen, welches in ein konzentrisches, im Durchmesser größeres ortsfestes, an einen Saugzug 31 angeschlossenes Abzugsrohr 32 einmündet.

Der Schachtofenteil 1 ist an seinem unteren Ende mit einem nach unten zu divergierenden, von einem wassergekühlten Mantel 33 gebildeten Unterteil 34 versehen. Dieser divergierende Unterteil 34 weist am kegelstumpfförmigen Mantel 33 liegende Öffnungen 35 auf, durch die schräg gegen die Boden-Vertiefung 12 gerichtete Plasmabrenner 36 in das Innere des Schachtofenteiles 1 ragen. Beim dargestellten Ausführungsbeispiel sind Gleichstrom-Plasmabrenner vorgesehen, die an Konsolen 37 gelagert sind. Die Plasmabrenner 36 sind axial in Richtung zum Boden 9 hin bzw. entgegengesetzt verschiebbar sowie mittels einer Schwenkeinrichtung 38 um geringe Winkelgrade verschwenkbar. So kann beim dargestellten Ausführungsbeispiel die Neigung der Plasmabrennerachse gegenüber der Horizontalen zwischen 30 und 60° verstellt und die Seitenneigung, wie aus Fig. 1 ersichtlich, ebenfalls verändert werden. Eine im Zentrum 18 des Schachtofenteiles 1 angeordnete Bodenanode 39, die sich im Fall der Verwendung von Wechselstrom-Plasmabrennern erübrigt, ist sorgfältig gegen den Blechpanzer 10 isoliert und mit einer nicht näher dargestellten Isolationsüberwachung versehen.

Am Übergang zwischen Schachtofenteil 1 und Herdofenteil 2 ist ein weiterer Plasmabrenner 40 vorgesehen, der steiler als die am Mantel des divergierenden Unterteiles 34 schwenkbar vorgesehenen Plasmabrenner 36 angeordnet ist.

Dieser Plasmabrenner 40 ist vorzugsweise lediglich längsverschiebbar, nicht jedoch schwenkbar gelagert. Seine Neigung gegenüber der Horizontalen beträgt zwischen 50 und 80°, vorzugsweise 70°. Er ist etwa gegen das Überlaufwehr 14 gerichtet.

Der Herdofenteil 2 ist mit einer elektrischen Beheizungseinrichtung 41, die beim dargestellten Ausführungsbeispiel als Lichtbogenbeheizung, deren Elektroden 42 durch den Deckel 43 geführt sind, ausgebildet ist, ausgestattet. Anstelle der Lichtbogenbeheizung könnte auch eine induktive Beheizungseinrichtung vorgesehen sein. Die Elektroden 42 sind an einem bis seitlich neben den Ofen ragenden Elektrodenhalter 45, der mittels einer Hubeinrichtung 46 an einer Säule 47 gelagert ist, heb- und senkbar und um eine Schwenkachse 48 seitlich verschwenkbar.

Der Herdofenteil 2 weist einen Bodenabstich 49 auf, der exzentrisch zum Zentrum 21 des Herdofenteiles 2 angeordnet ist. In einer Seitenwand 15 ist eine im Abstand 51 von der Boden-Vertiefung 13 vorgesehene Arbeitstür 52 zum Abschlacken angeordnet. Durch diese Arbeitstür 52 ist gegebenenfalls eine Sauerstoffblaslanze 53 zum Einblasen von Frischsauerstoff in den Herdofenteil 2 einführbar. Zur Aufgabe von Legierungselementen ist im wassergekühlten Deckel 43 des Herdofenteiles 2 ein Trichter 54 vorgesehen.

Die Funktion der Anlage ist nachfolgend anhand eines Erschmelzungsbeispieles von Stahl beschrieben:

In einer Anlage mit einer Schmelzkapazität von 40 t/h faßt der Schachtofenteil 1 mindestens 100 t Schrott 28. In den Schachtofenteil wird unlegierter Schrott 28 mit maximaler Stückgröße von 1,5 m Länge und Stückgewichten von maximal 2 t in Teilmengen von 10 t über die Schrottschurre 29 eingesetzt. Der verwendete Schrott schwankt, da es sich durchwegs um Fremdschrott handelt, in seiner chemischen Zusammensetzung. Eine Begrenzung besteht nur hinsichtlich des Feinanteiles (maximal 10% feine Späne). Der Schrott 28 bildet im Schachtofenteil 1 eine in der Boden-Vertiefung 12 fußende Säule und wird im Unterteil 34 mit den Plasmabrennern 36, die mit Argon und Sauerstoff betrieben werden, niedergeschmolzen.

Die Plasmastrahlen der Plasmabrenner 36 und 40 brennen in die vom Schrott 28 gebildete Säule kavernenartige Höhlungen 55. In der Boden-Vertiefung 12 des Schachtofenteiles 1, die relativ seicht ausgebildet ist, bildet sich ein Sumpf aus einem nachfolgend als Vorschmelze 56 bezeichneten geschmolzenen Schrott 28 in geringer Höhe bis zur Oberkante des Überlaufwehres 14. Zur Unterstützung des Aufschmelzvorganges können, wie in Fig. 1 mit strichlierten Linien, angedeutet, Erdgas-Sauerstoffbrenner 57, die in etwa gleicher Höhe wie die Plasmabrenner 36 und zwischen ihnen angeordnet sind, vorgesehen sein.

Die Neigung der Plasmabrenner 36 ist so eingestellt, daß ein kontinuierlicher Schmelzbetrieb mit maximaler Spannung (Leistung) möglich ist und daß die Vorschmelze 56 in Richtung zum Überlaufwehr 14 hin überhitzt wird. Der zwischen dem Schachtofenteil und dem Herdofenteil liegende Plasmabrenner 40 übermittelt seine Energie zum einem Teil dem Schrott 28 und zum anderen Teil der Vorschmelze 56, so daß diese im Bereich des Überlaufwehres 14 überhitzt wird und über das Überlaufwehr 14 in den Herdofenteil 2 fließt.

Zur Trockenlegung des Schachtofenteiles 1 zwecks Überprüfung, Reparatur oder zum Wechseln der Bodenanode 39 ist im Boden 9 ein Abstichloch 58 vorgesehen, welches exzentrisch angeordnet ist. Zur Durchführung von Manipulationen im Schachtofenteil 1 kann eine Türe vorgesehen sein, oder es erfolgen die Manipulationen durch die Öffnungen 35 im Mantel 34, durch die die Plasmabrenner 36 hindurchgeführt sind.

Zur Einstellung eines gewünschten Kohlenstoffgehaltes in der Vorschmelze 56 werden dem Einsatz feste Kohlenstoffträger zugesetzt. Bei Zusatz von 35 kg Koks pro Tonne metallischen Schrott-Einsatzes wird eine Vorschmelze mit einer Analyse von 1,5% Kohlenstoff, 0,2% Silicium, 0,5% Mangan, 0,040% Phosphor und 0,050% Schwefel kontinuierlich erhalten, die mit einer Temperatur von 1480 bis 1520°C in der Herdofenteil 2 übergeführt wird. Die Temperaturregelung im Schachtofenteil 1 kann durch Zuschaltung der Erdgas-Sauerstoffbrenner 57 erfolgen.

Sobald im Herdofenteil 2 die halbe Badtiefe erreicht ist (ca. 20 t), wird der Kohlenstoff durch Zufuhr von 25,4 Nm$^3$ Sauerstoff pro Tonne Schmelze gefrischt. Durch Zugabe von 20 kg Kalk und 2 kg Flußspat pro Tonne Schmelze wird eine Endanalyse von 0,15% Kohlenstoff, 0% Silicium, 0,20% Mangan, maximal 0,020% Phosphor und etwa 0,040% Schwefel erreicht. Die gebildete phosphorreiche Schlacke läuft über die Arbeitstüre 52 des Herdofenteiles 2 ab, sobald die Schmelze in diesem hoch genug steht. Die Temperatur wird durch zusätzliche Zufuhr von elektrischer Energie auf 1700°C eingestellt und die Schmelze durch den Bodenabstich 49 durch Kippen des Aggregates 3 schlackefrei abgestochen, sobald das Schmelzengewicht im Herdofenteil 2 maximal 40 t erreicht hat. Das Fertigmachen der Schmelze (Desoxidieren, weitere Entschwefelung und Legieren) erfolgt außerhalb des Herdofenteiles, beispielsweise während des Abstiches in eine Pfanne.

Das beim Frischen entstehende Kohlenmonoxid wird dem Schachtofenteil 1 zugeleitet und dort ebenso wie das aus festen Kohlenstoffträgern und dem als Plasmagas verwendeten Sauerstoff erzeugte Kohlenmonoxid durch die vom Schrott 28 gebildete Säule geleitet und durch Zusatz von zusätzlichem Sauerstoff im Schacht zu Kohlenstoffdioxid nachverbrannt.

Der Zusatz von Sauerstoff erfolgt durch im zylindrischen Schachtteil 24 des Schachtofenteiles 1 angeordnete Sauerstoffdüsen 59. Diese liegen etwa einen halben Meter über dem Ansatz des Unterteiles 34.

Die erfindungsgemäße Anlage ermöglicht einen kontinuierlichen Einschmelzprozeß von Schrott bei geringem Geräuschpegel, da die Plasmastrahlen nahezu vollständig von Schrott umgeben sind. Die Plasmabrenner 36 und 40 selbst sind vor einstürzendem Schrott infolge ihrer seitlich der Schrottsäule getroffenen Anordnung am divergierenden Unterteil 34 des Schachtofenteiles 1 gut geschützt. Die erfindungsgemäße Anlage erlaubt eine geringe Netzbelastung.

Bei Schmelzleistungen, die denen eines Hochleistungs-Lichtbogenofens vergleichbar sind (ca. 40 t/h fertiger Flüssigstahl) wird das Netz durch die Plasmabrenner 36, 40 des Schachtofenteiles 1 und die notwendige geringe elektrische Anschlußleistung der überhitzenden Drehstrom-Lichtbogenheizung 41 im

EP 0 240 485 B1

Herdofenteil 2 wesentlich weniger belastet als bei einem Hochleistungs-Lichtbogenofen gleicher Schmelzleistung.

Bei der erfindungsgemäßen Anlage erfolgt eine ständige Wärmeübertragung durch Strahlung der Plasmastrahlen auf den nachsinkenden Schrott, und es ergeben sich hohe Plasmabrenner- und Kathodenstandzeiten, da die Schrottlage im wesentlichen stets gleich bleibt, keine Stahl- und Schlackenspritzer zu den Plasmabrennern gelangen und nur wenig Zündvorgänge stattfinden.

Die erfindungsgemäße Anlage weist einen sehr guten energetischen Wirkungsgrad auf, der sich durch die Schrottvorwärmung infolge der Wärmenutzung der Abgase, durch geringe Temperaturverluste infolge der niedrigen Arbeitstemperatur im Schachtofenteil 1, durch geringe Ausflämmverluste infolge des vollkommen geschlossenen Aggregates, durch die günstige CO-Nachverbrennung und den weitgehend kontinuierlich ablaufenden Prozeß ergibt. Die Schrottvorwärmung durch die Abgase ermöglicht das Abbrennen von verbrennbaren Schrottverunreinigungen, wie z.B. Öl, und das Verdampfen von vorhandenem Wasser.

Nachfolgend ist eine Material- und Energiebilanz je Tonne flüssigen Rohstahls, wie sie mit der erfindungsgemäßen Anlage erzielt wird, wiedergegeben.

| Materialbilanz: | |
| --- | --- |
| Schrott | 1050 kg |
| Kalk ca. | 40 kg |
| Kohlenstoff | 30 kg = 35 kg Koks |
| Elektrische Energie | 400 kWh |
| Ar für Plasmabrenner | 2,5 Nm$^3$ |
| $O_2$ für Plasmabrenner | 15,0 Nm$^3$ |
| $O_2$ für Erdgas-Sauerstoffbrenner | 2,5 Nm$^3$ |
| $O_2$ für Nachverbrennung | 27,0 Nm$^3$ |
| $O_2$ Summe | 44,5 Nm$^3$ |
| Erdgas für die Erdgas-Sauerstoffbrenner | 6,0 Nm$^3$ |
| Abgasmenge | 58,0 Nm$^3$ |

| Wärmebilanz | | |
| --- | --- | --- |
| Wärmezufuhr: | | |
| Elektrische Energie | | 400 kWh |
| Reaktionswärme: | 12 kg C = 30 kWh | |
| (im Schrott) | 2 kg Si = 17 kWh | |
| | 3 kg Mn = 6 kWh | 53 kWh |
| C Verbrennung 18 kg $O_2$ + 13,5 kg C | | 36 kWh im Schachtteil |
| ($O_2$ Plasmabrenner mit C Koks) | | für Schrott zu CO |
| Erdgas-Sauerstoffbrenner 6 Nm$^3$ Erdgas | | 60 kWh |

| Ausnutzung der Abgaswärme t 900 °C aus: | | |
| --- | --- | --- |
| Argon | 2,5 Nm$^3$ | |
| Verbrennungsgase | 25,0 Nm$^3$ | |
| Frischgase | 22,0 Nm$^3$ | |
| Abgase der Erdgas-Sauerstoffbrenner | 8,5 Nm$^3$ | |
| Summe | 58,0 Nm$^3$ | 18 kWh fühlbare Wärme |

5

| Nachverbrennung CO im Schacht zu 50% genutzt | | |
|---|---|---|
| Verbrennungsgase | 25,0 Nm$^3$ | |
| Frischgase | 22,0 Nm$^3$ | |
| Abgase Erdgas-Sauerstoffbrenner | 8,5 Nm$^3$ | |
| Summe | 55,5 Nm$^3$ (70 kg) | 98 kWh |
| | | 665 kWh |

| Wärmeaustrag pro Tonne flüssigem Rohstahl: | |
|---|---|
| Stahlwärme 1640 °C | 411 kWh |
| Schlackenwärme 100 kg/t | 55 kWh |
| Abgasverlust 58 Nm$^3$ 900° | 18 kWh |
| Kühlwasserverluste | 70 kWh |
| Oberflächenverluste | 13 kWh |
| Ausflammverluste | 21 kWh |
| | 588 kWh |

| Wärmetechnischer Wirkungsgrad My 411/588 = 70% | |
|---|---|
| Schmelzleistung der Brenner | 4 × 10 t/h |
| Chargengröße | 40 t (variabel) |
| Schmelzenfolge | 1 Stunde |

## Patentansprüche

1. Anlage zur Herstellung von Stahl aus Schrott (28) und gegebenenfalls Zuschlagstoffen, mit einem Schachtofenteil (1), der einen einen flüssigen Sumpf aus Vorschmelze (56) aufnehmenden Boden (9) und seitlich in den unteren Teil seines Innenraumes (16) mündende Beheizungseinrichtungen (36, 40) aufweist, und mit einem mit dem Schachtofenteil (1) integral zusammenhängenden Herdofenteil (2), in den die Vorschmelze (56) aus dem Schachtofenteil (1) überführbar ist, dadurch gekennzeichnet,
   – daß der Unterteil (34) des Schachtofenteiles (1) gegenüber dem oberen, die Schrottsäule aufnehmenden Schachtteil (24) nach unten divergierend ausgebildet ist,
   – daß die in diesem Unterteil (34) angeordneten Beheizungseinrichtungen als Plasmabrenner (36, 40) ausgebildet sind,
   – daß der Herdofenteil (2) unmittelbar an den Unterteil (34) des Schachtofenteiles (1) anschließt und
   – daß der Herdofenteil (2) mindestens eine weitere, mit elektrischer Energie betriebene Beheizungsvorrichtung (41) zum Behandeln der aus dem Sumpf des Schachtofenteiles (1) übergeführten Vorschmelze (56) aufweist.

2. Anlage nach Anspruch 1, dadurch gekennzeichnet, daß zwischen dem unteren Schachtofenteil (1) und dem Herdofenteil (2) ein Überlaufwehr (14) vorgesehen ist.

3. Anlage nach Anspruch 1, dadurch gekennzeichnet, daß der Boden des Herdofenteiles (2) tiefer angeordnet ist als der Boden des Schachtofenteiles (1).

4. Anlage nach Anspruch 2, dadurch gekennzeichnet, daß eine Mehrzahl von Plasmabrennern (36) um den Umfang des Unterteiles (34) des Schachtofenteiles (1) verteilt angeordnet ist, welche Plasmabrenner (36) axial verschiebbar sowie schwenkbar ausgebildet sind, und daß ein zusätzlicher Plasmabrenner (40) gegen den Bereich des Überlaufwehrs (14) gerichtet ist.

5. Anlage nach Anspruch 1, 2 oder 3, dadurch gekennzeichnet, daß das gesamte, aus Schachtofenteil (1) und Herdofenteil (2) bestehende Aggregat (3) kippbar ist, u.z.w. senkrecht zu einer das Zentrum (18) des Schachtofenteiles (1) mit dem Zentrum (21) des Herdofenteiles (2) verbindenden horizontalen Achse.

6. Anlage nach Anspruch 5, dadurch gekennzeichnet, daß das Aggregat (3) auf Kippwiegen (4, 5, 6) positioniert ist.

7. Anlage nach Anspruch 5 oder 6, dadurch gekennzeichnet, daß der Herdofenteil (2) einen exzentrisch angeordneten Bodenabstich (49) für den Stahl und in einer Seitenwand (15) eine Arbeitstür (52) für das Abziehen der Schlacke aufweist.

8. Anlage nach Anspruch 1, 2 oder 3, dadurch gekennzeichnet, daß eine Sauerstoffblaslanze (53) zum Einblasen von Frischsauerstoff in den Herdofenteil (2) einführbar ist.

9. Anlage nach einem oder mehreren der Ansprüche 1, 2 oder 3, dadurch gekennzeichnet, daß sowohl der Unterteil (34) des Schachtofenteiles (1) als auch der Herdofenteil (2) einen im Grundriß kreisförmigen Innenraum (16, 17) aufweisen, wobei der Innenraum (16) des Schachtofenteiles (1) den Innenraum (17) des Herdofenteiles (2) im Grundriß etwa tangiert oder geringfügig überschneidet und der Übergang von einem Raum in den anderen verengt ausgebildet ist.

10. Anlage nach einem oder mehreren der Ansprüche 1 bis 9, dadurch gekennzeichnet, daß die Beheizungsvorrichtung des Herdofenteiles (2) als Lichtbogenaggregat ausgebildet ist.

11. Anlage nach einem oder mehreren der Ansprüche 1 bis 10, dadurch gekennzeichnet, daß der gegen den Bereich des Überlaufwehres (14) gerichtete Plasmabrenner (40) mit einem Neigungswinkel von 50 bis 80° gegen die Horizontale angeordnet ist.

## Claims

1. Plant for producing steel from scrap (28) and optionally fluxes, with a shaft furnace section (1) having a bottom (9) to receive liquid sump of premelt (56) and heating means (36, 40) entering laterally into the lower part of its interior (19), and with a hearth furnace section (2) integrally connected with the shaft furnace section (1), into which hearth furnace section the premelt (56) from the shaft furnace section (1) is transferable, characterised in that
   – the lower part (34) of the shaft furnace section (1) is designed to downwardly diverge relative to the upper shaft section (24) accommodating the column of scrap,
   – that the heating means arranged in said lower part (34) are designed as plasma burners (36, 40),
   – that the hearth furnace section (2) immediately follows upon the lower part (34) of the shaft furnace section (1) and
   – that the hearth furnace section (2) is provided with at least one further heating means (41) operated with electric energy for treating the premelt (56) transferred from the sump of the shaft furnace section (1).

2. Plant according to claim 1, characterised in that an overflow weir (14) is provided between the lower shaft furnace section (1) and the hearth furnace section (2).

3. Plant according to claim 1, characterised in that the bottom of the hearth furnace section (2) is arranged to be deeper than the bottom of the shaft furnace section (1).

4. Plant according to claim 2, characterised in that a plurality of plasma burners (36) is arranged to be distributed around the periphery of the lower part (34) of the shaft furnace section (1), which plasma burners (36) are designed to be axially displaceable as well as pivotable, and that an additional plasma burner (40) is directed toward the region of the overflow weir (14).

5. Plant according to claim 1, 2 or 3, characterised in that the total aggregate (3) consisting of shaft furnace section (1) and hearth furnace section (2) is tiltable, i.e. perpendicularly to a horizontal axis connecting the centre (18) of the shaft furnace section (1) with the centre (21) of the hearth furnace section (2).

6. Plant according to claim 5, characterised in that the aggregate (3) is positioned on tilting cradles (4, 5, 6).

7. Plant according to claim 5 or 6, characterised in that the hearth furnace section (2) is provided with an eccentrically arranged bottom tap (49) for the steel and, in a side wall (15), with a working door (52) for extraction of the slag.

8. Plant according to claim 1, 2 or 3, characterised in that an oxygen blowing lance (53) for blowing in refining oxygen is introduceable into the hearth furnace section (2).

9. Plant according to one or more of claims 1, 2 or 3, characterised in that both the lower part (34) of the shaft furnace section (1) and the hearth furnace section (2) are provided with an interior (16, 17) that is circular in its ground plan, the interior (16) of the shaft furnace section (1) being approximately tangent, in ground plan, to the interior (17) of the hearth furnace section (2) or slightly intersecting the same, with the transition from one interior to the other being designed to be narrowed.

10. Plant according to one or more of claims 1 to 9, characterised in that the heating means of the hearth furnace section (2) is designed as an electric arc aggregate.

11. Plant according to one or more of claims 1 to 10, characterised in that the plasma burner (40) directed toward the region of the overflow weir (14) is arranged with an angie of inclination of from 50 to 80° in respect of the horizontal.

## Revendications

1. Installation pour la fabrication de l'acier à partir de ferrailles (28) et éventuellement de produits d'addition, comportant une partie (1) formant four à cuve, qui présente un fond (9) qui reprend un cratère liquide de première fusion (56), ainsi que des dispositifs de chauffage (36, 40) qui débouchent latéralement dans la partie inférieure de son espace intérieur (16), et comportant une partie (2) formant four à sole (2) qui est contiguë et d'une pièce avec la partie (1) formant four à cuve et dans laquelle on peut transférer le bain de première fusion (56) provenant de la partie (1) formant four à cuve, caractérisée en ce

– que la partie inférieure (34) de la partie (1) formant four à cuve est conçue divergeant vers le bas par rapport à la partie supérieure formant cuve (24) qui reprend la colonne de ferrailles,

– que les dispositifs de chauffage disposés dans cette partie inférieure (34) sont conçus sous forme de chalumeaux à plasma (36, 40),

– que la partie (2) formant four à sole se raccorde directement à la partie inférieure (34) de la partie (1) formant four à cuve et

– que la partie (2) formant four à sole présente au moins un autre dispositif de chauffage (41), fonctionnant à l'énergie électrique, pour traiter le bain de première fusion (56) transféré depuis le cratère liquide de la partie (1) formant four à cuve.

2. Installation selon la revendication 1, caractérisée en ce qu'entre la partie inférieure (1) du four à cuve et le four à sole (2) est prévu un déversoir (14).

3. Installation selon la revendication 1, caractérisée en ce que le fond de la partie (2) formant four à sole est disposé plus bas que le fond de la partie (1) formant four à cuve.

4. Installation selon la revendication 2, caractérisée en ce qu'une pluralité de chalumeaux à plasma (36) sont disposés, répartis autour de la périphérie de la portion inférieure (34) de la partie (1) formant four à cuve et sont conçus de façon à pouvoir coulisser axialement et pivoter; et en ce qu'un chalumeau à plasma supplémentaire (40) est dirigé en direction de la zone du déversoir (14).

5. Installation selon la revendication 1, 2 ou 3, caractérisée en ce que l'ensemble (3) constitué de la partie (1) formant four à cuve et de la partie (2) formant four à sole peut basculer, et ceci perpendiculairement par rapport à un axe horizontal passant par le centre (18) de la partie (1) formant four à cuve et le centre (21) de la partie (2) formant four à sole.

6. Installation selon la revendication 5, caractérisée en ce que l'ensemble (3) est placé sur des berceaux de basculement (4, 5, 6).

7. Installation selon la revendication 5 ou 6, caractérisée en ce que la partie (2) formant four à sole présente pour l'acier une percée (49) de fond disposée excentriquement et, pour l'évacuation du laitier, une porte de travail (52) dans une paroi latérale (15).

8. Installation selon la revendication 1, 2 ou 3, caractérisée en ce que l'on peut introduire une lance (53) de soufflage d'oxygène pour souffler de l'oxygène frais dans la partie (2) formant four à sole.

9. Installation selon une ou plusieurs des revendications 1, 2 ou 3, caractérisée en ce qu'aussi bien la portion inférieure (34) de la partie (1) formant four à cuve que la partie (2) formant four à sole présentent un espace intérieur (16, 17) en forme de cercle en vue en plan, étant précisé que l'espace intérieur (16) de la partie (1) formant four à cuve tangente à peu près, en vue en plan, l'espace intérieur (17) de la partie (2) formant four à sole ou l'intersecte légèrement et que le passage d'un espace à l'autre est étroit.

10. Installation selon une ou plusieurs des revendications 1 à 9, caractérisée en ce que le dispositif de chauffage de la partie (2) formant four à sole est conçue comme groupe à arc électrique.

11. Installation selon l'une ou plusieurs des revendications 1 à 10, caractérisée en ce que le chalumeau à plasma (40) orienté en direction de la zone du déversoir (14) est disposé avec un angle d'inclinaison de 50 à 80° par rapport à l'horizontale.

# FIG. 1

# FIG. 3

# FIG. 2